(19) Europäisches Patentamt
European Patent Office
Office européen des brevets

(11) **EP 0 444 322 B1**

(12) **EUROPÄISCHE PATENTSCHRIFT**

(45) Veröffentlichungstag und Bekanntmachung des Hinweises auf die Patenterteilung:
**15.05.1996 Patentblatt 1996/20**

(51) Int Cl.6: **H04B 1/12**, H04B 1/16, H04B 7/005

(21) Anmeldenummer: **90125808.7**

(22) Anmeldetag: **29.12.1990**

(54) **Autoradio mit einem digitalen Entzerrernetzwerk**

Car radio with digital equalizer

Autoradio avec égaliseur numérique

(84) Benannte Vertragsstaaten:
**AT DE ES FR GB IT SE**

(30) Priorität: **26.02.1990 DE 4005976**

(43) Veröffentlichungstag der Anmeldung:
**04.09.1991 Patentblatt 1991/36**

(73) Patentinhaber: **Blaupunkt-Werke GmbH**
**D-31132 Hildesheim (DE)**

(72) Erfinder: **Kammeyer, Karl-Dirk, Dr. Ing.**
**W-2110 Buchholz, (Nordheide) (DE)**

(56) Entgegenhaltungen:
EP-A- 0 176 029        EP-A- 0 322 542
EP-A- 0 375 971        DE-A- 3 916 426
DE-A- 3 916 426

**Beschreibung**

Gegenstand des Schutzrechtes ist ein neues Autoradio mit einem digitalen Entzerrernetzwerk der im Oberbegriff des Anspruchs 1 näher definierten Art für die Heilung von durch Mehrwegeempfang gestörten frequenzmodulierten Signalen.

Es ist bekannt, daß man viele Störungen in einem digitalisierten Signal durch geeignete Rechenoperationen heilen kann. Dazu wird der digitale Abtastwert mit dem Kehrwert des Störfaktors multipliziert, in dem sich das gestörte Signal vom ungestörten Signal unterscheidet.

Beim Rundfunkempfang ist das Maß der Störung des empfangenen Signals, also der Störfaktor, unbekannt. Beim Empfang von UKW-Sendern, das heißt von frequenzmodulierten Trägern, weiß man jedoch, daß der Sender den Träger mit konstanter Amplitude aussendet. Aus den Abweichungen der Hüllkurve des empfangenen Signals von einem konstanten Wert kann man daher zunächst auf eine Störung schließen. Doch ist daraus der Störungsfaktor selbst noch nicht bekannt, da die Dämpfung des Sendersignals auf dem direkten Übertragungsweg unbekannt bleibt und damit auch der Bezugswert, auf den die festgestellten Amplitudenschwankungen zu beziehen sind, die z. B. als Impulsspitzen oder Signaleinbrüche auftreten.

Solche Signalspitzen oder -einbrüche entstehen bei dem Mehrwegeempfang eines Sendersignals und haben ihre Ursache darin, daß sich am Eingang des Rundfunkempfängers das direkt empfangene Signal mit anderen Signalen, die auf ihrem Ausbreitungsweg reflektiert wurden, überlagern. Den Übertragungsraum zwischen Sender und Empfänger kann man daher als ein Verzerrungsnetzwerk ansehen, dem auf der Empfängerseite ein entsprechendes Entzerrernetzwerk, welches den Kehrwert der Verzerrung im Ubertragungsraum darstellt, folgen muß, wenn man die Störungen wieder beseitigen will.

Für die Heilung einer Störung tastet man die Signalamplitude in der Zwischenfrequenzlage regelmäßig ab und digitalisiert den Amplitudenwert und schiebt diese Werte über eine vielstufige Laufzeitkette zu deren Ausgang. In jeder Stufe wird der Digitalwert entsprechend dem Wert eines der Stufe zugeordneten Parameters verändert.

Bei einem stationären Empfänger sind die Verzerrungen durch Mehrwegeempfang konstant, so daß sich auch konstante Parameter ermitteln lassen.

In der Laufzeitkette ist, wenn alle Parameter die Werte 1 haben würden, ein Abbild des während der Durchlaufzeit empfangenen Signalverlaufs vorhanden. Wenn der Träger zu einem Zeitpunkt $t_o$ eingeschaltet wird, so hat das auf dem direkten Weg empfangene Signal im ersten Augenblick seines Empfangs einen der konstanten Amplitude entsprechenden Wert. Dieser Wert findet sich nach der Laufzeit T im Entzerrernetzwerkes an dessen Ausgang. Am Ausgang des vorletzten Kettengliedes der Laufzeitkette steht dann ebenfalls dieser Wert, aber beeinflußt durch die Signal-Reflektionen mit der kürzesten Laufzeit, nämlich die während der ersten Taktzeit empfangenen. Am Anfang der Laufzeitkette steht der Wert des direkt empfangenen Signals, beeiflußt aber durch die Signal-Reflektionen mit der längsten Laufzeit.

Wenn das Maß bekannt ist, mit dem die einzelnen Signal-Reflektionen die Werte in den einzelnen Kettengliedern beeinflussen, dann kann man durch eine entsprechende Wahl von Parametern die Signalverzerrung in jedem Kettenglied heilen. Jedoch treten Probleme immer dann auf, wenn sich das direkt empfangene Signal und die Reflektion genau auslöschen. Die Heilung dieser Verzerrung ist nur dadurch möglich, daß man die Werte in den vorausgehenden und den folgenden Kettengliedern in die Ermittlung, d. h. Berechnung der Parameter mit einbezieht.

Bei einem Autoradio, an dessen Antenne die Empfangsfeldstärke bei der Fahrt ständig schwankt, überlagern sich diese Schwankungen nach den erwähnten, durch die Reflektionen hervorgerufenen Schwankungen. Daher müssen in einem Autoradio ständig die entsprechenden Parameter in einem adaptiven Prozeß ermittelt werden.

Zum Stand der Technik der Entzerrerschaltung gehören die Unterlagen folgender Patentanmeldungen:

DE-OS 35 43 898

DE-OS 35 17 485

DE-OS 34 44 449

DE-OS 39 16 426

und EP-A 325 668.

Die DE-OS-39 16 426 wurde am 22.11.90 und die EP-A 325 668 am 02.08.89 veröffentlicht.

Bei diesen Entzerrernetzwerken treten Konvergensprobleme auf, d. h. starke Abhängigkeiten des Einschwingvorganges von den zufälligen Startwerten bei der Eerechnung der Parameter. Ziel der Erfindung ist, diese Konvergenzprobleme zu vermindern.

Eine Lösung dieser Aufgabe ist durch die Merkmale des Anspruchs 1 gekennzeichnet. Anhand der Zeichnung werden Ausführungsbeispiele dieser Lösung näher beschrieben. Dabei zeigt

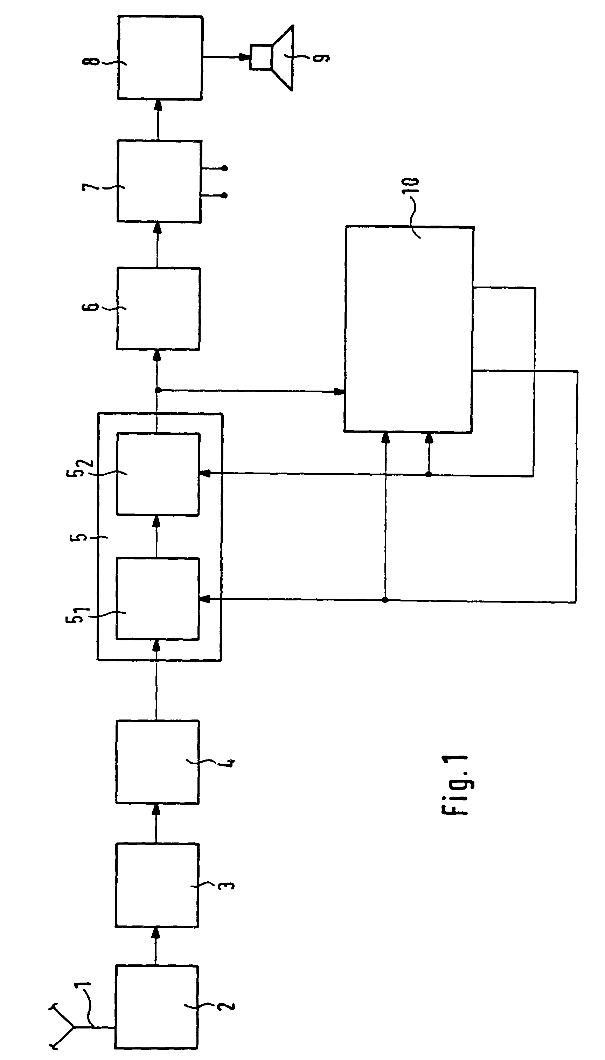

Figur 1        ein Übersichtschaltbild eines Autoradios mit einem adaptiven Entzerrer

Figur 2        ein Übersichtschaltbild des neuen Parameterprozessors des Entzerrer

EP 0 444 322 B1

Figur 3/4    zweiverschiedene Ausführungsbeispiele eines Gradientenfilters innerhalb des Parameterprozessors.

Figur 5    Übersichtsschaltbilder von Teilentzerrern in dem adaptiven Entzerrer.

Das neue Autoradio umfaßt eine an die Antenne 1 angeschlossene Eingangsstufe 2, deren Ausgangssignale in der ZF-Stufe 3 auf die Zwischenfrequenz heruntergemischt und dann verstärkt werden. In einem A/D-Wandler 4 werden die zwischenfrequenten Signale digitalisiert. Die digitalen Signale werden dann über einen Entzerrer 5 geleitet. Das in diesem Entzerrer 5 "geheilte" Signal wird in einem D/A-Wandler 6 in ein analoges Signal zurückgewandelt und danach im Demodulator 7 demoduliert, in der NF-Stufe 8 verstärkt und über den Lautsprecher 9 wiedergegeben.

Gegebenenfalls weist der Demodulator 7 Anschlüsse für nicht dargestellte RDS- und Verkehrsfunkauswertschaltungen auf.

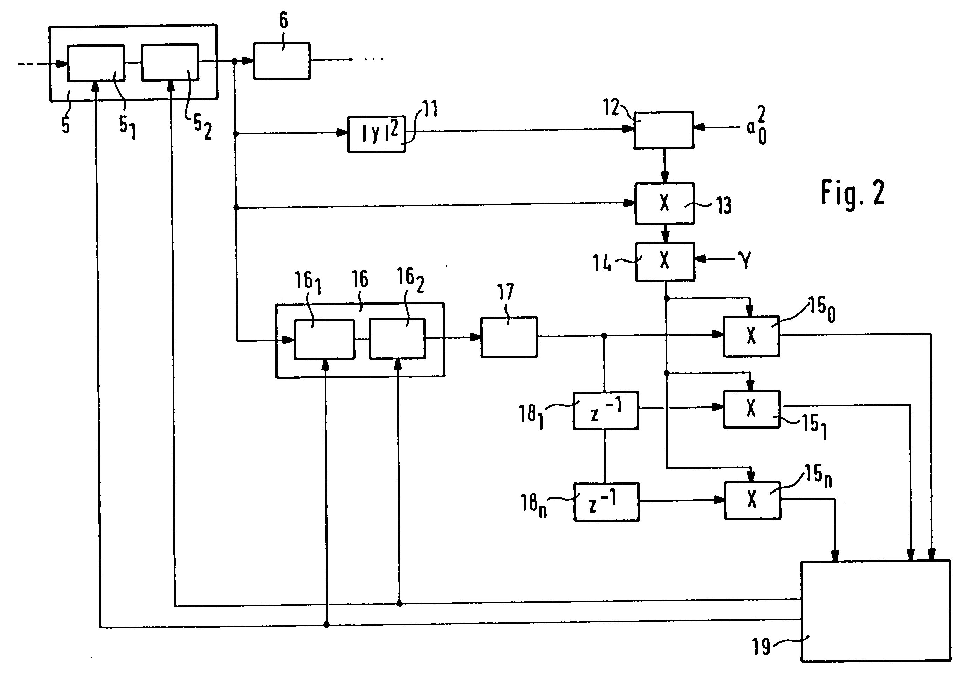

Die Parameter, die zur Heilung der zwischenfrequenten Signale im Entzerrer 5 benötigt werden, liefert ein Parameterprozessor 10, der vor dem D/A-Wandler 6 an den Ausgang des Entzerrers 5 angeschlossen ist. Der Parameterprozessor wird anhand des Blockschaltbildes, Figur 2, näher erläutert.

Das Ausgangssignal $Y_i$ des Entzerrers 5 zum Zeitpunkt $t_i$ durchläuft im folgenden Takt im Prozessor zwei verschiedene Wege. Auf dem einen Weg wird in einem Betragsbildner 11 die Größe $|Y|^2$ des Signals gebildet und hiervon in der Subtrahierstufe 12 die Größe $a_0{}^2$ einer Referenzamplitude $a_0$ abgezogen. Die hier entstandene Signalgröße wird in einem ersten Multiplizierer 13 des Parameterprozessors mit dem Ausgangssignal $Y_i$ multipliziert und anschließend in einem zweiten Multiplizierer 14 durch Multiplikation mit einem Faktor $\gamma$ der festen Schrittweite verändert. Dieses Produkt wird den ersten Eingängen einer Anzahl parallel geschalteter dritter Multiplizierstufen $15_0$ - $15_n$ hinzugefügt.

Der zweite Weg des Ausgangssignals $Y_i$ des Entzerrers 5 wird über einen identisch aufgebauten zweiten Entzerrer 16 einer Stufe 17 zugeleitet, die den konjugiert komplexen Wert des Ausgangssignals des Entzerrers 16 bildet. Dieser konjugiert komplexe Wert wird dann dem zweiten Eingang der ersten der Multiplizierstufen $15_0$ zugeführt und dort mit dem Ausgangswert des Multiplizierers 14 multipliziert.

Eine Verzögerungsstufe $18_1$, die den in der Stufe 17 gebildeten konjugiert komplexen Wert des Ausgangssignals des zweiten Entzerrers 16 um eine Takteinheit verzögert, ist einerseits mit der zweiten der Multiplizierstufe $15_1$ verbunden und andererseits an eine weitere Verzögerungsstufe $18_2$ angeschlossen. Schließlich wird der konjugiert komplexe Wert nach der Verzögerung um n Takte in der Multiplizierstufe $15_n$ mit dem dann aktuellen Ausgangswert des Multiplizierers 14 multipliziert.

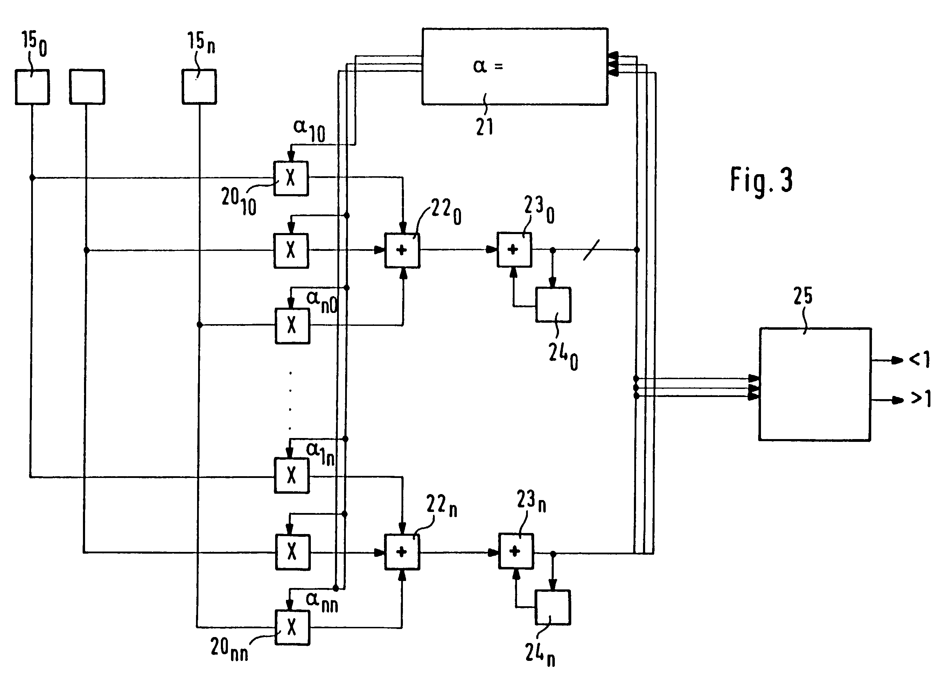

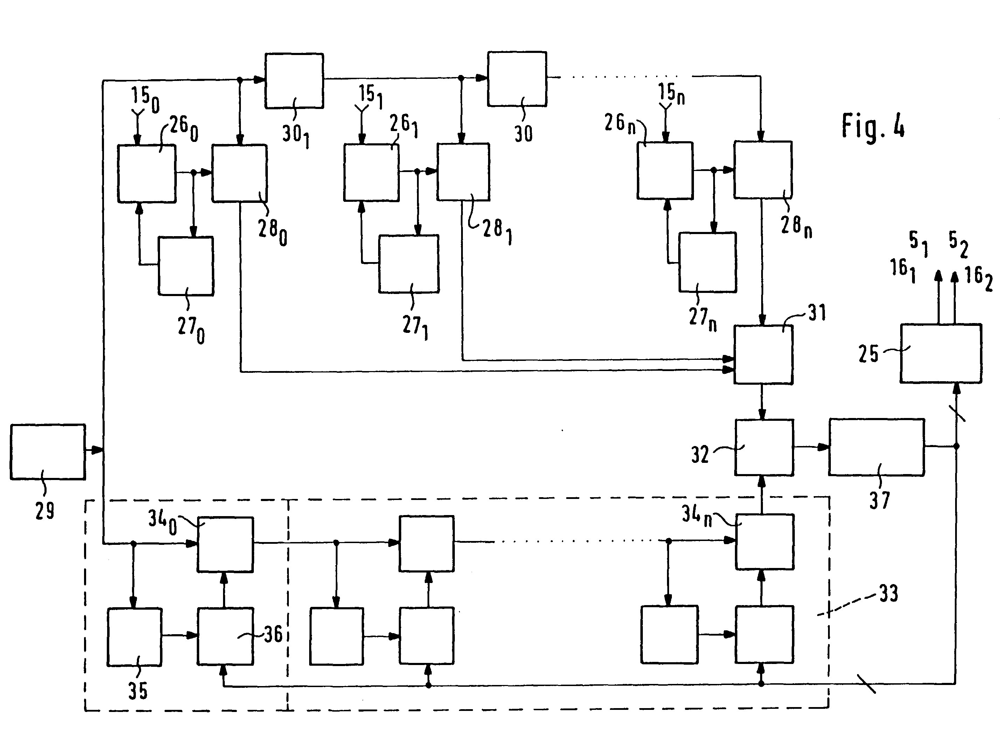

Die Signalwerte an den Ausgängen der Multiplizierstufe $15_0$ - $15_n$ bilden inkrementelle Korrekturwerte für die Polynomkoeffizienten, aus denen die Parameter in einer Schaltung 19 ermittelt werden, für deren Ausbildung zwei Alternativen anhand der Figur 3 und 4 erläutert werden.

Nach dem Ausführungsbeispiel in Figur 3 wird der momentane Wert des Ausgangssignals $1_o$ (i) der dritten Multiplizierstufe $15_0$ in einem ersten Multiplizierer $20_{10}$ mit einem zugeordneten Signal $\alpha_{10}$ multipliziert, das in dem Rechenwerk 21 nach der Formel

$$\alpha_{\nu\mu} = \frac{-Z_{o\nu}^{(n-\mu)}}{C_o \cdot \prod_{\substack{\lambda=1 \\ \lambda \neq \nu}}^{n} (Z_{o\nu} - Z_{o\lambda})} \qquad \begin{aligned} \nu &= 1, \ldots, n \\ \mu &= 0, \ldots, n \end{aligned}$$

gebildet wird. In dem parallel geschalteten Multiplizierer $20_{n0}$ wird das Ausgangssignal der Multiplizierstufe $15_0$ mit dem Signal $\alpha_{n0}$ multipliziert.

Entsprechend wird das Ausgangssignal der Multiplizierstufe $15_n$ im zugeordneten Multiplizierer $20_{1n}$ - $20_{nn}$ mit den Faktoren $\alpha_{1n}$ - $\alpha_{nn}$ multipliziert.

Die Ausgangssignale der Multiplizierer 20, die jeweils dasselbe Eingangssignal, z. B. der Multiplizierstufe $15_0$, erhalten, werden jeweils anderen Addierern $22_1$ - $22_n$ zugeleitet und dort mit den Ausgangswerten der Multiplizierer 20, die die Ausgangssignale der anderen Multiplizierstufen $15_1$ - $15_n$ erhalten, addiert und über weitere Addierer 23 an den Separator 25 gegeben.

Als zweites Eingangssignal erhalten die Addierer 23 das in der Verzögerungsstufe 24 um eine Takteinheit verzögerte, vorherige Ausgangssignal desselben Addierers 23. Die Ausgangssignale Z der Addierer 23 werden neben dem Separator 25 auch dem Rechenwerk 21 zugeleitet, in welchem, wie bereits erwähnt, aus diesen Werten die Faktoren $\alpha_{n\mu}$ gebildet werden.

In dem Separator 25 werden die Eingangssignale getrennt, und zwar derart, daß diejenigen Ausgangssignale, deren Betrag < 1 ist, einem ersten Teilentzerrer $5_1$, $16_1$ im im Entzerrer 5 bzw. 16 und die Eingangssignale, deren Betrag > 1 ist, einem zweiten Teilentzerrer $5_2$ bzw. $16_2$ als Parameter zugeführt.

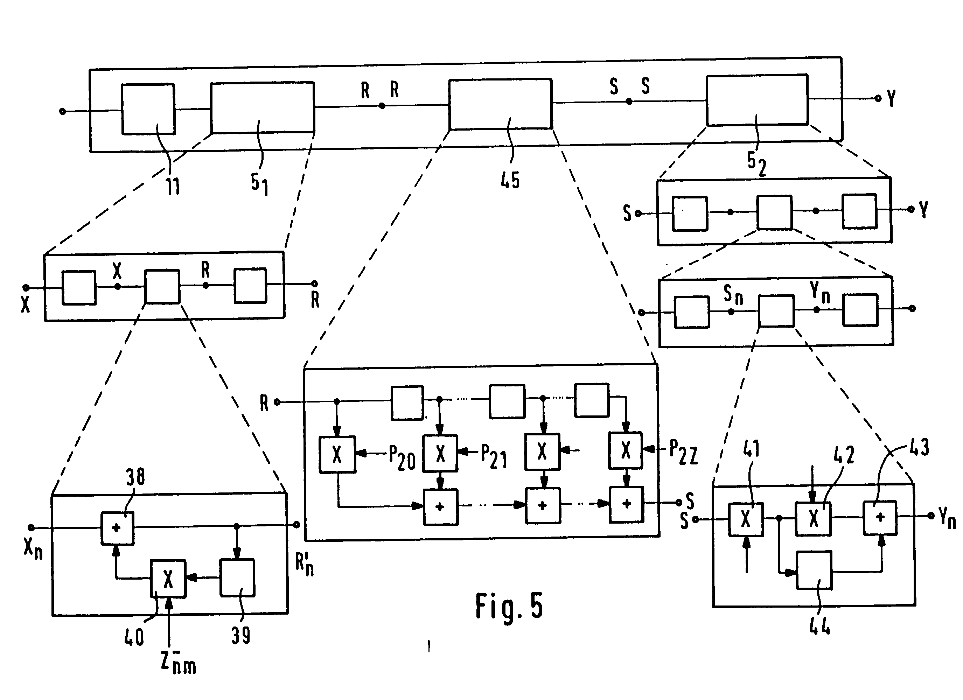

Der Aufbau des ersten Teilentzerrers $5_1$, $16_1$ entspricht dem Aufbau des Teilentzerrers 12, der Aufbau der zweiten Teilentzerrer $5_2$, $16_2$ dem Aufbau des Teilentzerrers 14 in der bereits eingangs genannten Patentanmeldung DE 39 16 426. Der Einfachheit halber sei hier deren Beschreibung anhand der Figur 5 (dort Figur 3) wiederholt.

Der erste Teilentzerrer $5_1$, $16_1$ dient der Beseitigung der minimalphasigen Nullstellen des Übertragungskanals, wobei jede Nullstelle durch ein rekursives Teilsystem in der Kaskade kompensiert wird. Der zweite Teilentzerrer $5_2$, $16_2$ kompensiert die nicht minimalphasigen Nullstellen.

Jede rekursive Kaskadenstufe des ersten Teilentzerrers $5_1$ besteht aus einem Addierer 38, in welchem zu dem Eingangssignal $X_n$ das in einer Verzögerungsstufe 39 um eine Takteinheit verzögerte und in dem Multiplizierer 40 mit dem zugeordneten Parameter zum multiplizierten Ausgangssignal des zeitlich vorhergehenden Adaptionsschrittes hinzuaddiert wird. Der zweite Teilentzerrer $5_2$, $16_2$ besteht aus einer Doppelkaskade, das heißt, jede ihrer Kaskadenstufen hat wiederum eine Kaskadenstruktur, deren einzelne nicht rekursive Kaskadenstufe einen ersten Multiplizierer 41, einen weiteren nachgeschalteten zweiten Multiplizierer 42 und einen diesem folgenden Addierer 43 umfaßt. Die zweite Eingangsgröße des Addierers kommt aus dem in der Verzögerungsstufe 44 um $2^n-1$ Rechenzeiteinheit verzögerten Ausgangssignal des ersten Multiplizierers. In dem ersten Multiplizierer 41 wird das Eingangssignal der Kaskadenstufe mit dem zugeordneten der veränderlichen Parameter $Z_{\gamma\mu}$ multipliziert, während in dem zweiten Multiplizierer 42 das Ausgangssignal des ersten Multiplizierers 41 mit einer Potenz des Parameterwertes multipliziert wird. Hat die Kaskadenstufe die laufende Zahl n, dann beträgt die Potenz $2^n-1$.

Der in der älteren Patentanmeldung erwähnte weitere mittlere Teilentzerrer 45 kann auch in dem Ausführungsbeispiel der vorliegenden Lösung zwischen die Teilentzerrer $5_1$ und $5_2$ bzw. $16_1$ und $16_2$ eingefügt werden, wobei die Parameter für diesen zusätzlichen Teilentzerrer in der Weise gebildet werden, wie sie in der älteren Patentanmeldung beschrieben ist.

Alternativ zu der anhand der Figur 3 beschriebenen Schaltung können die Parameter aus den Polynom-Koeffizienten mit der anhand der Figur 4 beschriebenen Schaltung ermittelt werden.

Den Ausgangssignalen der Multiplizierstufe $15_0$ - $15_n$ werden in einer Addierstufe $26_0$ - $26_n$ die in der Verzögerungsstufe $27_0$ - $27_n$ um eine Takteinheit verzögerten früheren Ausgangssignale derselben Addierstufe 26 zugeführt. An die Addierstufen 26 sind einerseits Multiplizierstufen $28_0$ - $28_n$ angeschlossen, deren zweite Eingänge an einen Rauschgenerator 29 direkt oder über Verzögerungsglieder $30_1$ - $30_n$ angeschlossen sind. Die Ausgangssignale der Multiplizierstufen $28_0$ - $28_n$ werden in einer Addierkette 31 addiert. Von diesem Summensignal werden in einer Subtrahierstufe 32 die Ausgangssignale abgezogen, die sich in einer zweiten Addierkette 33 aus der aufeinanderfolgenden Addition der Ausgangssignale der einzelnen Kettenglieder ergeben. Jedes der Kettenglieder umfaßt eine Addierstufe 34, welcher im ersten Kettenglied einerseits das Rauschsignal des Rauschgenerators 29 und andererseits das im Verzögerungsglied 35 um eine Takteinheit verzögerte und in dem Multiplizierer 36 mit dem Parameter multiplizierte Rauschsignal zugeführt wird. Die weiteren Addierstufen $34_2$ - $34_n$ erhalten die jeweiligen Ausgangssignale der vorangegangenen Addierstufen $34_1$ - $34_{n-1}$ sowie die in Stufen $35_2$ - $35_n$ verzögerten und in den Multiplizierern $36_2$ - $36_n$ mit den Parameterwerten multiplizierten Signale. Die Parameterwerte werden einem Rechenwerk 37 entnommen, das an den Ausgang der Subtrahierstufe 32 angeschlossen ist und aus dessen Ausgangssignalen die Parameter nach dem bekannten "Least Mean Square" -Algorithmus (Methode der kleinsten Fehlerquadrate) ermittelt. In einem dem Rechenwerk 37 nachgeschalteten Separator 25 werden die Parameter wieder dem Betrag nach getrennt und den Teilentzerrern $5_1$, $5_2$ bzw. $16_1$ und $16_2$ zugeleitet.

## Patentansprüche

1. Autoradio mit einem adaptiven, digitalen Entzerrer in der Zwischenfrequenzstufe für durch Mehrwegeempfang verursachte Signalverzerrungen, mit einem Parameterprozessor, für die Bestimmung der Parameter Z des adaptiven digitalen Entzerrers, der einen Gradienten-Filter für die Parameter umfaßt, dadurch gekennzeichnet, daß der Entzerrer eine Hintereinanderschaltung eines ersten rekursiven adaptiven Teilentzerrers ($5_1$) in Kaskadenstruktur und eines zweiten nicht rekursiven adaptiven Teilentzerrers ($5_2$) in Doppelkaskadenstruktur aufweist, daß der Parameterprozessor (10) Mittel zur Bildung von inkrementellen Korrekturwerten für Polynomkoeffizienten aus einem Ausgangssignal des zweiten Teilentzerrers ($5_2$) aufweist, daß er weiterhin Mittel zur Bildung von Parametern Z für den ersten und den zweiten Teilentzerrer ($5_1$, $5_2$) aus den inkrementellen Korrekturwerten aufweist, daß der erste Teilentzerrer ($5_1$) Mittel aufweist, die unter Verwendung der zugeführten Parameter minimalphasige Nullstellen im Zwischenfrequenzsignal kompensieren und daß der zweite Teilentzerrer ($5_2$) Mittel aufweist, die unter Verwendung der zugeführten Parameter nicht minimalphasige Nullstellen im Zwischenfrequenzsignal kompensieren.

2. Autoradio nach Anspruch 1, dadurch gekennzeichnet, daß das Ausgangssignal ($Y_i$) des Entzerrers (5) über einen Betragsbildner (11) geleitet wird, daß hiervon von einer ersten Subtrahierstufe (12) der Betrag einer Referenzam-

plitude ($a_0{}^2$) so subtrahiert wird, daß das Ausgangssignal der Subtrahierstufe (12) in einem ersten Multiplizierer (13) mit dem Ausgangssignal ($Y_i$) des Entzerrers multipliziert wird, daß das Ausgangssignal des ersten Multipliziers (13) in einem zweiten Multiplizierer mit einem Faktor ($\gamma$) der festen Schrittweite multipliziert wird, daß parallel dazu das Ausgangssignal ($Y_i$) des Entzerrers über einen zweiten, mit dem ersten identischen Entzerrer (16) geleitet und danach über eine Schaltung (17) zur Bildung des konjugiert komplexen Wertes geleitet sowohl direkt als auch stufenweise über n hintereinandergeschaltete Verzögerungsglieder (18) in dritten Multiplizierern ($15_0$ bis $15_n$) mit dem Ausgangssignal des zweiten Multiplizierers multipliziert werden, daß die Ausgangssignale der dritten Multiplizierer ($15_0$ bis $15_n$) je für sich getrennt in vierten Multiplizierern ($20_{10}$) mit den Faktoren $\alpha_{10}$ bis $\alpha_{nn}$ multipliziert werden, wobei

$$\alpha_{\nu\mu} = \frac{-Z_{o\nu}{}^{(n-\mu)}}{C_o \cdot \prod\limits_{\substack{\lambda=1 \\ \lambda \neq \nu}}^{n}(Z_{o\nu} - Z_{o\lambda})} \qquad \begin{array}{l} \nu = 1, \ldots, n \\ \mu = 0, \ldots, n \end{array}$$

daß die Ausgangssignale der ersten mit den dritten Multiplizierern (15) verbundenen vierten Multiplizierer ($20_{10}$ bis $20_{n0}$) in einer Addierstufe ($22_1$) und die Ausgangssignale der letzten mit dem dritten Multiplizierer (15) verbundenen vierten Multiplizierern ($20_{1n}$ bis $20_{nn}$) in einer Addierstufe ($22_n$) addiert werden und daß die Ausgangssignale der Addierstufen ($22_1$ bis $22_n$) in einer weiteren Addierstufe (23) den in einer Verzögerungsstufe (24) um eine Takteinheit verzögerten früheren Ausgangssignal dieser weiteren Addierstufe (23) hinzugefügt werden und daß deren Ausgangssignale einerseits dem Rechenwert (21) zur Ermittlung der Faktoren $\alpha$ und andererseits mittels eines Separators (25) in dem die Eingangssignale derart getrennt werden, daß diejenigen Ausgangssignale, deren Betrag kleiner als 1 ist, ersten Teilentzerrer ($5_1$, $16_1$) im Entzerrer (5 bzw. 16) und die Eingangssignale, deren Betrag größer als 1 ist, dem zweiten Teilentzerrer ($5_2$ bzw. $16_2$) als Parameter Z zugeführt werden.

3. Autoradio nach Anspruch 1, dadurch gekennzeichnet, daß das Ausgangssignal ($Y_i$) des Entzerrers (5) über einen Betragsbildner (11) geleitet wird, daß hiervon in einer ersten Subtrahierstufe (12) der Betrag einer Referenzamplitude ($a_0{}^2$) subtrahiert wird, daß das Ausgangssignal der Subtrahierstufe (12) in einem ersten Multiplizierer (13) mit dem Ausgangssignal ($Y_i$) des Entzerrers (15) multipliziert wird, und daß das Ausgangssignal des ersten Multiplizierers (13) mit in einem zweiten Multiplizierer (14) mit einem Faktor ($\gamma$) der festen Schrittweite multipliziert wird, daß parallel dazu das Ausgangssignal ($Y_i$) des Entzerrers (5) über einen zweiten mit dem ersten identischen Entzerrer (16) geleitet und danach über eine Schaltung (17) zur Bildung des konjugiert komplexen Wertes geführt sowohl direkt als auch stufenweise über n hintereinandergeschaltete Verzögerungsglieder (18) in dritten Multiplizierern ($15_0$ bis $15_n$) mit dem Ausgangssignal des zweiten Multiplizierers (14) multipliziert wird, daß die Ausgangssignale der dritten Multiplizierer ($15_0$ bis $15_n$) über Addierstufen ($26_0$ bis $26_n$), deren zweite Eingänge über Verzögerungsstufen (27) mit den Ausgängen der Addierstufen ($26_0$ bis $26_n$) verbunden sind, auf Multiplizierstufen (28) gegeben werden, deren zweiten Eingänge mit einem Rauschgenerator (29) direkt oder über eine Kette von Verzögerungsstufen (30) verbunden sind und daß die Werte aller Ausgangssignale der Multiplizierstufen (28) in einer Addierstufe (31) addiert werden, die ausgangsseitig mit einer zweiten Subtrahierstufe (32) verbunden ist, an deren zweiten Eingang das Ausgangssignal einer Addierkette (33) liegt, an der das Signal des Rauschgenerators (29) nacheinander Kettenglieder durchläuft, die eine Addierstufe (34), eine Verzögerungsleitung (35) und einen Multiplizierer (36) umfassen, wobei in der Addierstufe (34) dem Eingangssignal das um eine Takteinheit verzögerte und durch den zugeordneten Parameterwert modifizierte Eingangssignal hinzuaddiert wird und daß aus dem Ausgangssignal der zweiten Subtrahierstufe (32) in einem Rechenwerk (37) die Parameter nach dem bekannten LMS-Algorithmus taktweise berechnet werden.

**Claims**

1. Car radio with an adaptive, digital equalizer in the intermediate frequency stage for signal distortions which are caused by multipath reception, with a parameter processor, for determining the parameters Z of the adaptive digital equalizer which comprises a gradient filter for the parameters, characterized in that the equalizer has a series circuit of a first, recursive adaptive sub-equalizer ($5_1$) in a cascade structure and of a second, non-recursive adaptive sub-equalizer ($5_2$) in a double cascade structure, in that the parameter processor (10) has means for forming incremental correction values for polynomial coefficients from an output signal of the second sub-equalizer ($5_2$), in that it also has means for forming parameters Z for the first and second sub-equalizers ($5_1$, $5_2$) from the incre-

mental correction values, in that the first sub-equalizer ($5_1$) has means which compensate minimum-phase zero settings in the intermediate frequency signal using the parameters supplied, and in that the second sub-equalizer ($5_2$) has means which compensate non-minimum-phase zero settings in the intermediate frequency signal using the parameters supplied.

2. Car radio according to Claim 1, characterized in that the output signal ($Y_i$) of the equalizer (5) is directed via an absolute-value generator (11), in that the absolute value of a reference amplitude ($a_0{}^2$) is subtracted from the said output signal ($Y_i$) by a first subtractor stage (12) in such a way that the output signal of the subtractor stage (12) is multiplied in a first multiplier (13) by the output signal ($Y_i$) of the equalizer, in that the output signal of the first multiplier (13) is multiplied in a second multiplier by a factor ($\gamma$) of the fixed increment, in that, parallel to this, the output signal ($Y_i$) of the equalizer, directed via a second equalizer (16) which is identical to the first, and subsequently directed via a circuit (17) in order to form the complex conjugate value, is multiplied both directly and incrementally by the output signal of the second multiplier in third multipliers ($15_0$ to $15_n$) via n delay elements (18) connected in series, in that the output signals of the third multipliers ($15_0$ to $15_n$) are each independently multiplied in fourth multipliers ($20_{10}$) by the factors $\alpha_{10}$ to $\alpha_{n\mu}$, where

$$\alpha_{\nu\mu} = \frac{-z_{o\nu}^{(n-\mu)}}{C_o \cdot \prod_{\substack{\lambda=1 \\ \lambda \neq \nu}}^{n} (z_{o\nu} - z_{o\lambda})} \qquad \begin{array}{l} \nu = 1, \ldots, n \\ \mu = 0, \ldots, n \end{array}$$

in that the output signals of the first fourth multipliers ($20_{10}$ to $20_{n0}$) which are connected to the third multipliers (15) are added in an adder stage ($22_1$) and the output signals of the last fourth multipliers ($20_{1n}$ to $20_{nn}$) which are connected to the third multiplier (15) are added in an adder stage ($22_n$), and in that the output signals of the adder stages ($22_1$ to $22_n$) are added in a further adder stage (23) to the earlier output signal, delayed by one clock unit in a delay stage (24), of this further adder stage (23), and in that the output signals of the further adder stage (23) are [lacuna] on the one hand to the arithmetic unit (21) in order to determine the factors $\alpha$ and on the other hand [lacuna] by means of a separator (25) in which the input signals are separated in such a way that those output signals whose absolute value is less than 1 are fed, as parameters Z, to a first sub-equalizer ($5_1$, $16_1$) in the equalizer (5 and 16) and the input signals whose absolute value is greater than 1 are fed, as parameters Z, to the second sub-equalizer (52 and 162).

3. Car radio according to Claim 1, characterized in that the output signal ($Y_i$) of the equalizer (5) is directed via an absolute-value generator (11), in that the absolute value of a reference amplitude ($a_0{}^2$) is subtracted from the said output signal ($Y_i$) in a first subtractor stage (12), in that the output signal of the subtractor stage (12) is multiplied in a first multiplier (13) by the output signal ($Y_i$) of the equalizer (5), and in that the output signal of the first multiplier (13) is multiplied in a second multiplier (14) by a factor ($\gamma$) of the fixed increment, in that, parallel to this, the output signal ($Y_i$) of the equalizer (5), directed via a second equalizer (16) which is identical to the first, and subsequently conducted via a circuit (17) in order to form the complex conjugate value, is multiplied both directly and incrementally by the output signal of the second multiplier (14) in third multipliers ($15_0$ to $15_n$) via n delay elements (18) connected in series, in that the output signals of the third multipliers ($15_0$ to $15_n$) are transmitted to multiplier stages (28) via adder stages ($26_0$ to $26_n$) whose second inputs are connected via delay stages (27) to the outputs of the adder stages ($26_0$ to $26_n$), the second inputs of which multiplier stages (28) are connected to a noise generator (29) directly or via a chain of delay stages (30), and in that the values of all the output signals of the multiplier stages (28) are added in an adder stage (31) which is connected at the output end to a second subtractor stage (32) at whose second input the output signal of an adder chain (33) is present, at which adder chain (33) the signal of the noise generator (29) successively passes through chain elements which comprise an adder stage (34), a delay line (35) and a multiplier (36), the input signal which is delayed by one clock unit and modified by the associated parameter value being added to the input signal in the adder stage (34), and in that the parameters are calculated in clocked fashion from the output signal of the second subtractor stage (32) in an arithmetic unit (37) according to the known LMS algorithm.

**Revendications**

1. Autoradio avec un égaliseur numérique auto-réglable dans l'étage à fréquence intermédiaire pour des distorsions de signaux causées par un processeur paramétrique, pour la détermination des paramètres de l'égaliseur numérique auto-réglable, qui comprend un filtre à gradient pour les paramètres, autoradio caractérisé en ce que l'égaliseur présente un montage l'un derrière l'autre d'un premier égaliseur partiel ($5_1$) récurrent, auto-réglable dans une structure en cascade et d'un deuxième égaliseur partiel ($5_2$), auto-réglable, non récurrent dans une structure en double cascade, en ce que le processeur paramétrique (10) présente des moyens pour former des valeurs de correction incrémentiels pour des coefficients polynomiques à partir d'un signal de sortie du second égaliseur partiel ($5_2$), en ce qu'il présente en outre des moyens pour former des paramètres Z pour le premier et le second égaliseur partiel ($5_1$, $5_2$) à partir des valeurs incrémentielles de correction, en ce que le premier égaliseur partiel ($5_1$) présente des moyens, qui compensent en utilisant les paramètres amenés les remises à zéro à déphasage minimal dans le signal à fréquence intermédiaire et en ce que le second égaliseur partiel ($5_2$) présente des moyens, qui compensent, en utilisant les paramètres amenés, des remises à zéro à déphasage non minimal dans le signal à fréquence intermédiaire.

**2.** Autoradio selon la revendication 1, caractérisé en ce que le signal de sortie ($Y_i$) de l'égaliseur (5) est amené par un formateur de la valeur absolue (11), en ce qu'à partir de là on soustrait par un premier étage de soustraction (12) le montant d'une amplitude de référence ($a_o{}^2$) d'une manière telle que le signal de sortie de l'étage de soustraction (12) est multiplié dans un premier multiplicateur (13) par le signal de sortie ($Y_i$) de l'égaliseur, en ce que le signal de sortie du premier multiplicateur (13) est multiplié dans un second multiplicateur par un facteur $\gamma$ de l'incrément fixe, en ce que parallèlement à cela le signal de sortie ($Y_i$) de l'égaliseur, amené au moyen d'un second égaliseur (16) identique au premier, et ensuite amené par l'intermédiaire d'un circuit (17) servant à former la valeur complexe de façon conjuguée directement et aussi par étapes au moyen de n éléments de retard (18) montés les uns derrière les autres, est multiplié dans des troisièmes multiplicateurs ($15_o$ à $15_n$) par le signal de sortie du second multiplicateur, en ce que les signaux de sortie des troisièmes multiplicateurs ($15_o$ à $15_n$), sont, séparément chacun pour soi, multipliés dans des quatrièmes multiplicateurs ($20_{10}$) par les facteurs $\alpha_{10}$ à $\alpha_{nn}$, facteur qui correspond à la formule ci-après :

$$\alpha_{\nu\mu} = \frac{-z_{0\nu}{}^{(n-\mu)}}{C_o \cdot \prod_{\substack{\lambda = 1 \\ \lambda \neq \nu}}^{n} (z_{0\nu} - z_{0\lambda})} \qquad \begin{array}{l} \nu = 1, \ \ldots, \ n \\[1em] \mu = 0, \ \ldots, \ n \end{array}$$

en ce que les signaux de sortie des premiers quatrièmes multiplicateurs ($20_{10}$ à $20_{no}$), reliés aux troisièmes multiplicateurs (15) sont additionnés dans un étage de sommation ($22_1$) et les signaux de sortie des derniers quatrièmes multiplicateurs ($20_{1n}$ à $20_{nn}$) reliés au troisième multiplicateur (15), sont additionnés dans un étage de sommation ($22_n$) et en ce que les signaux de sortie des étages de sommation ($22_1$ à $22_n$) sont ajoutés dans un autre étage de sommation (23) au signal antérieur de sortie de cet autre étage de sommation (23), retardé dans un étage de temporisation (24) d'une unité de cycle et en ce que ses signaux de sortie sont amenés d'une part au calculateur (21) pour déterminer les facteurs a et d'autre part au moyen d'un séparateur (25) dans lequel les signaux d'entrée sont séparés d'une manière telle que les signaux de sortie, dont le montant est inférieur à 1, sont amenés à un premier égaliseur partiel ($5_1$, $16_1$) dans l'égaliseur (5 ou 16) et les signaux d'entrée, dont le montant est supérieur à 1 sont amenés au second égaliseur partiel ($5_2$ ou $16_2$) en tant que paramètre Z.

**3.** Autoradio selon la revendication 1, caractérisé en ce que le signal de sortie ($Y_i$) de l'égaliseur (5) est amené par l'intermédiaire d'un formateur de valeur absolue (11), en ce qu'à partir de là on soustrait dans un premier étage de soustraction (12) le montant d'une amplitude de référence ($a_o{}^2$), en ce qu'on multiplie le signal de sortie (12) dans un premier multiplicateur (13) par le signal de sortie ($Y_i$) de l'égaliseur (15) et en ce que l'on multiplie le signal de sortie du premier multiplicateur (13) dans un deuxième multiplicateur (14) par un facteur ($\gamma$) de l'incrément fixe, en ce que parallèlement à cela on multiplie le signal de sortie ($Y_i$) de l'égaliseur (5) amené par l'intermédiaire d'un second égaliseur (16), identique au premier, et ensuite amené par l'intermédiaire d'un circuit (17) servant à former la valeur complexe, de façon conjuguée, à la fois directement et aussi par étapes via n éléments de retard (18), montés les uns derrière les autres, dans des troisièmes multiplicateurs ($15_o$ à $15_n$) par le signal de sortie du second multiplicateur (14), en ce que les signaux de sortie des troisièmes multiplicateurs ($15_o$ à $15_n$) sont délivrés aux étages de multiplication (28) par l'intermédiaire d'étages de sommation ($26_o$ à $26_n$), dont les secondes entrées sont reliées par l'intermédiaire d'étages de temporisation (27) aux sorties des étages de sommation ($26_o$ à $26_n$), étages de multiplication (28) dont les secondes entrées sont reliées à un générateur de bruit (29) directement ou par l'intermédiaire d'une chaîne d'étages de temporisation (30) et en ce que les valeurs de tous les signaux de sortie des étages de multiplication (28) sont sommés dans un étage de sommation (31), qui du côté de la sortie est relié à un second étage de soustraction (32), sur les secondes entrées duquel se trouve le signal de sortie d'une chaîne de sommation (33), sur laquelle le signal du générateur de bruit (29) traverse les uns après les autres les éléments de la chaîne qui comprennent une ligne de temporisation (35) et un multiplicateur (36), en ajoutant à cela dans l'étage de sommation (34) au signal d'entrée le signal d'entrée retardé d'une unité de cycle et modifié par la valeur correspondante des paramètres et en ce qu'à partir du signal de sortie du second étage de soustraction (32) on calcule dans un système de calcul (37) les paramètres de façon cyclique selon l'algorithme connu LM5.

Fig.1

Fig. 2

Fig. 3

EP 0 444 322 B1

Fig. 4

Fig. 5